# EUROPEAN PATENT APPLICATION

(11) **EP 4 572 237 A1**
(43) Date of publication of application: **18.06.2025**
(21) Application number: 23216772.6
(22) Date of filing: 14.12.2023
(51) Int. Cl.: H04L 12/40

(54) **CONTROLLER AREA NETWORK (CAN) TRANSCEIVER, CAN DEVICE, CAN SYSTEM AND METHOD FOR THE CAN TRANSCEIVER**

(71) Applicant: NXP B.V., 5656 AG Eindhoven (NL)
(72) Inventor: Muth, Matthias Berthold, 5656 AG Eindhoven (NL); Elend, Bernd Uwe Gerhard, 5656 AG Eindhoven (NL)
(74) Representative: Schmütz, Christian Klaus Johannes

(57) **Abstract**

The present invention relates to a Controller Area Network, CAN, transceiver, comprising: a transmit data, TXD, interface, a receive data, RXD, interface, a bus interface for coupling to a CAN bus, a receiver unit, a transmitter unit, and a wake-up unit, wherein the bus interface is configured to receive a first differential voltage signal, referred to as the bus signal, from the CAN bus via the bus interface, wherein the wake-up unit is configured to detect a silent section of the bus signal representing an end-of-frame, EOF, field of a first CAN frame and/or an inter-mission-space, ITM, following to the EOF field based on the bus signal, wherein the wake-up unit is configured to detect in the silent section of the bus signal at least one wake-up pulse having a differential bus voltage that is less than a first predefined negative threshold voltage (TH1), and wherein the wake-up unit is configured to cause a wake-up signal representing a wake-up instruction to be sent via an interface of the transceiver, in particular the RXD interface or another interface of the transceiver, in response to the at least one detected wake-up pulse. The present invention also relates to a CAN device, a CAN system and a method for the CAN transceiver.

## Description

### TECHNICAL FIELD

The present disclosure relates to a CAN transceiver, a CAN device, a CAN system, and a method for the CAN transceiver.

### BACKGROUND

A Controller Area Network (CAN) can be used for communications within vehicles, in particular within automobiles. It will be appreciated that CAN also has application outside of the field of automobiles. A CAN bus system may include multiple CAN devices, so called as nodes or electronic control units (ECUs), such as an engine control module (ECM), a power train control module (PCM), airbags, antilock brakes, cruise control, electric power steering, audio systems, windows, doors, mirror adjustment, battery and recharging systems for hybrid/electric cars, and many more. Several nodes may be connected to a joint CAN bus, such that the nodes can communicate among each other over the CAN bus using a CAN protocol. The CAN protocol is used to enable communications between the various nodes. The data link layer of the CAN protocol is standardized as International Standards Organization (ISO) 11898-1:2003. CAN Flexible Data-Rate or "CAN FD" is an extension of the standardized CAN data link layer protocol and is integrated into the ISO 11898-1:2015 standard. CAN FD may provide higher data rates. The standardized CAN data link layer protocol is being further extended to provide even higher data rates. A further extension, referred to as CAN XL, with an optional level scheme on the physical layer allowing even higher data rates, is in the definition phase discussed under CiA610 (CAN in Automation) and is moving towards standardization in the form of ISO11898-1:202x.

### SUMMARY

This summary is provided to introduce a selection of concepts in a simplified form that are further described below in the detailed description. This summary is not intended to identify key features or essential features of the claimed subject matter, nor is it intended to be used to limit the scope of the claimed subject matter.

Aspects of the disclosure are defined in the accompanying claims.

In accordance with a first aspect of the present disclosure, a Controller Area Network, CAN, transceiver is provided. The CAN transceiver comprising: a transmit data, TXD, interface, a receive data, RXD, interface, a bus interface for coupling to a CAN bus, a receiver unit, a transmitter unit, and a wake-up unit, wherein the bus interface is configured to receive a first differential voltage signal, referred to as the bus signal, from the CAN bus via the bus interface, wherein the wake-up unit is configured to detect a silent section of the bus signal representing an end-of-frame, EOF, field of a first CAN frame and/or an inter-mission-space, ITM, following to the EOF field based on the bus signal, wherein the wake-up unit is configured to detect in the silent section of the bus signal at least one wake-up pulse having a differential bus voltage that is less than a first predefined negative threshold voltage, and wherein the wake-up unit is configured to cause a wake-up signal representing a wake-up instruction to be sent via an interface of the transceiver, in particular the RXD interface or another interface of the transceiver, in response to the at least one detected wake-up pulse.

In one or more embodiments, the wake-up unit is configured to detect, based on the bus signal, a trigger pulse having a differential bus voltage that is greater than a positive, predefined second threshold voltage, wherein the wake-up unit is configured to wait for a predefined waiting time, that follows the trigger pulse, wherein the wake-up unit is configured to detect, based on the bus signal, a base section of the bus signal, wherein the base section having a differential bus voltage between the first threshold voltage and the second threshold voltage during a predefined base time following the waiting time, wherein the wake-up unit is configured to detect, based on the bus signal, an observation section of the bus signal, wherein the observation section having a differential bus voltage that is less than the second threshold voltage during a predefined observation time following the base time, wherein the observation section forms at least a part of the silent section, and wherein the wake-up unit is configured to detect in the observation section of the bus signal at least one wake-up pulse having a differential bus voltage that is less than the first threshold voltage.

In one or more embodiments, the waiting time is between 0.01 µs and 2 µs, in particular between 0.1 µs and 1.3 µs, and/or wherein the base time is between 2 and 7 times a cycle time according to a predefined bit frequency at the bus interface, and/or wherein the observation time is between 5 and 7 times the cycle time according to the predefined bit frequency at the bus interface.

In one or more embodiments, the second threshold voltage is between plus 0.5 volts and plus 0.9 volts.

In one or more embodiments, the first threshold voltage is between minus 0.25 volts and minus 0.45 volts.

In one or more embodiments, the wake-up unit is configured to detect in the silent section a predefined wake-up pattern comprising a plurality of wake-up pulses each having a differential bus voltage that is less than the first predefined negative threshold voltage, and wherein the wake-up unit is configured to cause the wake-up signal representing a wake-up instruction to be sent, in particular via the RXD interface or another interface of the transceiver, in response to the detected wake-up pattern.

In one or more embodiments, the wake-up unit is coupled to the receiver unit and/or the RXD interface to cause the sending of the wake-up signal.

In one or more embodiments, the CAN transceiver and/or the receiver unit is configured to treat a wake-up pulse as a recessive bit.

In one or more embodiments, the wake-up unit is configured to control the receiver unit such that the receiver unit generates a signal at the RXD interface representing a recessive bit based on the wake-up pulse.

In one or more embodiments, the wake-up unit is configured to detect a first section of the bus signal representing at least one of the Start-of-frame field, SOF, the arbitration field, and/or the control field of the first CAN frame, wherein the wake-up unit is configured to detect another pattern, referred to as reference pattern, being represented by the first section of the bus signal, and wherein the wake-up unit is configured to cause the wake-up signal only if and/or after the reference pattern was detected.

In one or more embodiments, the CAN transceiver, if being activated, is configured to receive, via an interface of the transceiver other than the bus interface, a control instruction to send out a wake-up pattern, wherein the CAN transceiver is configured to receive another CAN frame, referred to as second CAN frame, via the TXD interface, and wherein the CAN transceiver is configured to transmit an output signal via the bus interface, such that the output signal represents the second CAN frame with the exception that an instruction section of the output signal representing the EOF and/or the ITM of the CAN frame further comprises at least one wake-up pulse having a differential bus voltage less than the first threshold voltage.

According to a second aspect of the present disclosure, a CAN device is provided. The CAN device comprising: a CAN transceiver according to the first aspect and/or any corresponding embodiment, and a CAN controller, wherein the CAN controller is coupled to the TXD interface of the CAN transceiver and the RXD interface of the CAN transceiver, wherein the wake-up unit of the CAN transceiver is configured, in response to the detected wake-up pulse or the detected wake-up pattern, to cause the wake-up signal to be sent to the CAN controller via the RXD interface or another interface of the CAN transceiver, and wherein the CAN controller is configured to change from an inactive state to an operating state in response to the received wake-up signal.

According to a third aspect of the present disclosure, a CAN system is provided. The CAN system comprising: a CAN bus, a first CAN transceiver according to first aspect and/or any corresponding embodiment, and a second CAN transceiver according to first aspect and/or any corresponding embodiment, wherein the wake-up unit of the first CAN transceiver is configured to detect as a wake-up pattern a first wake-up pattern, wherein the wake-up unit of the second CAN transceiver is configured to detect as another wake-up pattern a second wake-up pattern, and wherein the first and second wake-up patterns are different.

In one or more embodiment, the CAN system comprising: a first CAN device according to the second aspect, a second CAN device according to the second aspect, wherein the first CAN device comprises as transceiver the first transceiver, and wherein the second CAN device comprises as transceiver the second transceiver.

According to a fourth aspect of the present disclosure, a method for a CAN transceiver comprising a transmit data, TXD, interface, a receive data, RXD, interface, a bus interface for coupling to a CAN bus, a receiver unit, a transmitter unit, and a wake-up unit is provided. The method comprises the steps of: (a) receiving a first differential voltage signal, referred to as the bus signal at the bus interface, (b) the wake-up unit detecting a silent section of the bus signal representing an end-of-frame, EOF, field of a CAN frame and/or an inter-mission-space, ITM, following to the EOF field based on the bus signal, (c) the wake-up unit detecting in the silent second of the bus signal at least one wake-up pulse having a differential bus voltage that is less than a first predefined negative threshold voltage (TH1), and (d) the wake-up unit causing a wake-up signal representing a wake-up instruction to be sent via an interface of the transceiver, in particular the RXD interface or another interface of the transceiver, in response to the at least one detected wake-up pulse.

In accordance with a fifth aspect of the present disclosure, a computer program is provided, comprising executable instructions which, when executed by a processing unit of the transceiver, cause the processing unit being configured to carry out the method of the fourth aspect and/or one or more embodiments thereof.

### DESCRIPTION OF DRAWINGS

Embodiments of the present disclosure will be described in more detail with reference to the appended drawings. It is to be noted, however, that the appended drawings illustrate only typical embodiments of the present disclosure and are therefore not to be considered limiting of its scope, such that other equally effective embodiments may be implemented. Advantages of the subject matter claimed will become apparent to those skilled in the art upon reading this description in conjunction with the accompanying drawings, in which like reference numerals have been used to designate like elements, and in which:
Figure 1 shows an embodiment of a simplified block diagram of a CAN system.
Figure 2 shows an embodiment of a simplified block diagram of a CAN device.
Figure 3 shows an embodiment of a waveform.
Figure 4 shows an embodiment of a simplified CAN XL frame.
Figure 5 shows an embodiment of a simplified CAN frame.
Figure 6 shows another embodiment of a simplified waveform.
Figure 7 shows another embodiment of a simplified block diagram of a CAN device.
Figure 8 shows an embodiment of a simplified flow chart.
Figure 9 shows an embodiment of a simplified method flow chart.

### DESCRIPTION OF EMBODIMENTS

As indicated in the background section of the present disclosure, a Controller Area Network (CAN) can be used for communications, in particular within vehicles. It will be appreciated that CAN communication also has application outside of the field of vehicles.

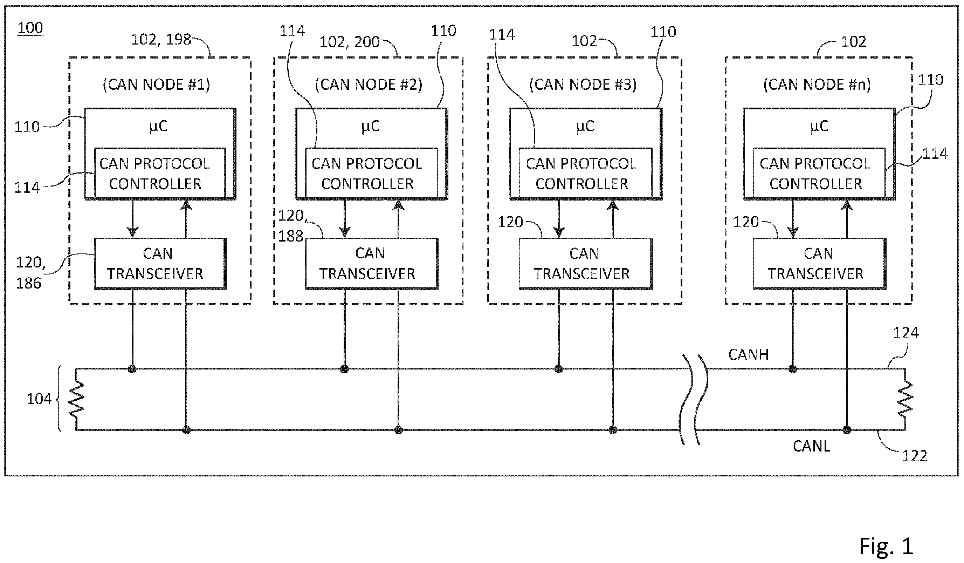

Figure 1 schematically illustrates an example of a CAN system 100. The CAN system may comprise several CAN devices 102 and a CAN bus 104. Each of the CAN devices 102 can be connected to the CAN bus 104. As a result, the CAN devices 102 are able to communicate among each other via the CAN bus 104. A CAN device 102 may also be referred to as a CAN node. In an example, a CAN device 102 may be at least a part of an electronic control units (ECUs), as an engine control module (ECM), a power train control module (PCM), an airbag module, an antilock brakes module, a cruise control module, an electric power steering module, an audio module, a window module, a door module, a mirror adjustment module, a battery module, in particular a battery management module, a recharging module for hybrid/electric cars, and/or other.

A CAN protocol may enable a communication via the CAN bus 104. For example, the CAN protocol may enable communications between at least two CAN devices 102. In an example, each CAN device 102 includes a CAN transceiver 120 and a microcontroller 110 having an embedded CAN controller 114. The CAN controller 114 may be referred to as a controller or a CAN protocol controller. The CAN transceiver 120 may be referred to as a transceiver.

The microcontroller 110 may be connected to at least one further device (not shown) such as a sensor, an actuator, or some other control device. The microcontroller 110 may be programmed to determine the meaning of a received message and/or to generate an appropriate outgoing message. The microcontroller 110, which may also be referred to as host processor, host or digital signal processor (DSPs). In an example, the microcontroller 110 may support application software that interacts with the CAN controller 108.

The CAN bus 104 is preferably configured to carry an analog differential signal, in particular a differential voltage signal representing a CAN frame. The CAN bus 104 may comprise a first signal line 124, which is referred to as a first CAN signal line 124 and/or a CAN high (CANH) bus line 124. The CAN bus 104 may also comprise a second signal line 126, which is referred to as a second CAN signal line 126 and/or as the CAN low (CANL) bus line 126.

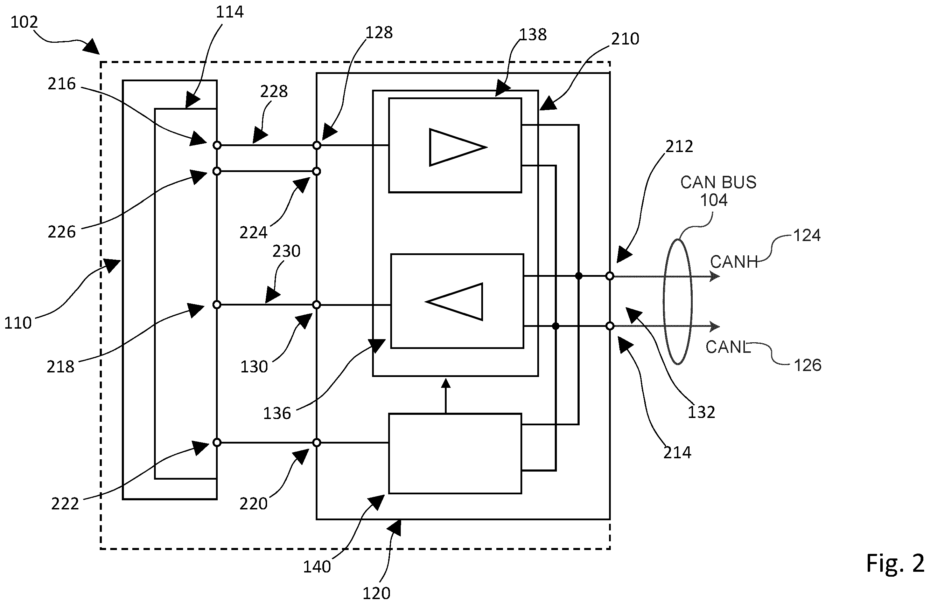

Figure 2 schematically illustrates an example of a CAN device 102. The CAN device 102 comprises the CAN transceiver 120 and the CAN controller 114. In an example, the CAN device 102 comprises the microcontroller 110 comprising the CAN controller 114. If advantageous explanations, preferred features, technical effects and/or advantages are presented in the following with respect to the CAN device 102, these may apply in an analogous manner to the CAN transceiver 120.

The CAN transceiver 120 may comprise a transmit data, TXD, interface 128. The TXD interface 128 of the CAN transceiver 120 may also be referred to as a first TXD interface 128. The CAN transceiver 120 may further comprise a receive data, RXD, interface 130. The RXD interface 130 of the CAN transceiver 120 may also be referred to as a first RXD interface 130. The CAN transceiver 120 may comprise a further interface 220. This further interface 220 may also be referred to as a first wake-up interface 220. The CAN transceiver 120 may comprise a further interface 224. The further interface 224 may also be referred to as a first control interface 224.

The CAN controller 114 may comprise a TXD interface 216, which may be referred to as a second TXD interface 216. In addition, the CAN controller 114 may comprise an RXD interface 218, which is referred to as a second RXD interface 218. In an example, the CAN controller 114 may comprise another interface 222, referred to as a second wake-up interface 222. The CAN controller 114 may comprise another interface 226, referred to as the second control interface 226.

In an example, the first TXD interface 128 of the CAN transceiver 120 is coupled to the second TXD interface 216 of the CAN controller 114 via a signal connection 228. In an example, the CAN controller 114 may be configured to generate a signal, referred to as a TXD signal, at the second TXD interface 210 that represents a CAN frame. A CAN frame comprises a plurality of bits.

The CAN transceiver 120 comprises another interface 132, referred to as the bus interface 132. In an example, the bus interface 132 comprises a first bus terminal 212 and a second bus terminal 214. The first bus terminal 212 is configured to be connected to the first CAN bus line 124. The second bus terminal 214 is configured to be connected to the second CAN bus line 126.

The CAN transceiver 120 comprises a transmitter unit 138. The transmitter unit 138 may be coupled to the first TXD interface 128. Via the first TXD interface 128, the transmitter unit 138 may receive the TXD signal representing a CAN frame. The transmitter unit 138 may further be coupled to the bus interface 132. The transmitter unit 138 may be configured to generate a bus signal at the CAN BUS interface 132 based on the received CAN frame, such that the bus signal represents the CAN frame. The bus signal is preferably a differential voltage signal. The corresponding voltage difference refers to a difference between the voltage at the first bus terminal 212 and the voltage at the second bus terminal 214.

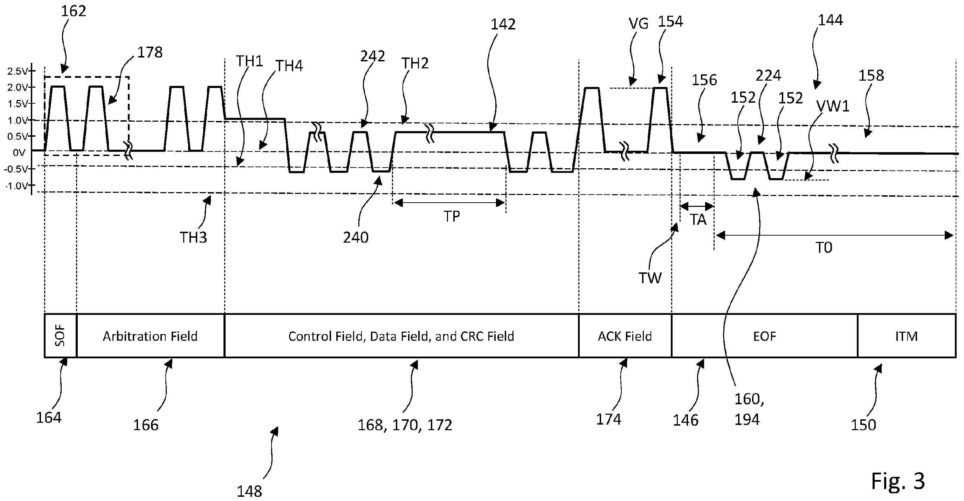

The CAN transceiver 120 comprises a receiver unit 136. The receiver unit 136 may be coupled to the CAN BUS interface 132. The receiver unit 136 can receive a bus signal 142 via the CAN BUS interface 132. The bus signal 142 may also be referred to as CAN bus signal 142. Figure 3 schematically illustrates an example of a bus signal 142. The bus signal 142 may be generated by another CAN device 102 and transmitted to the CAN BUS interface 132 of the CAN transceiver 120 (of Figure 2) via the CAN bus 104. In an example, the CAN bus signal 142 may represent the CAN frame 148 shown schematically and exemplarily in Figure 3. The CAN frame 148 is also referred to as the first CAN frame 148.

The receiver unit 136 of the CAN transceiver 120 may be coupled to the first RXD interface 130. The first RXD interface 130 may be coupled to the second RXD interface 218 of the CAN controller 114 via a signal connection 230. In an example, the receiver unit 136 may be configured to generate an RXD signal at the first RXD interface 130 based on the first CAN frame 148 such that the RXD signal represents the first CAN frame 148. The RXD signal may be transmitted from the first RXD interface 130 to the second RXD interface 218 of the CAN controller 114 via the signal connection 230.

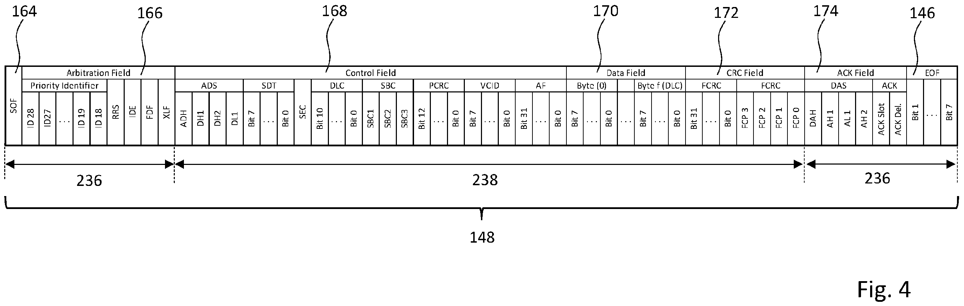

Figure 4 schematically illustrates an example of the first CAN frame 148. The first CAN frame 148 shown in Figure 4 may be a CAN frame according to the CAN XL protocol. The first CAN frame 148 may comprise, for example: a start-of-frame, SOF, bit 164, an arbitration field 166, a control field 168, a data field 170, a cycle redundancy check, CRC, field 172, an acknowledge, ACK, field 174, and an end-of-frame, EOF, field 146. Further details on the structural design of a CAN frame according to the CAN XL protocol can be taken from the associated standard.

If the first CAN frame 148 is configured according to the CAN XL protocol, the bits of the first CAN frame 148 may be transmitted at two different bit frequencies 236, 238. The bit frequency, in particular one of the bit frequencies 236, 238, may relate to and/or be the reciprocal of the time (length) of a bit. For example, the SOF bit 164 and the bits of the arbitration field 166 may be transmitted at a first bit frequency 236. The bits of the control field 168, the bits of the data field 170, and the bits of the CRC field 172 may be transmitted at a second bit frequency 238. The second bit frequency 238 is preferably greater than the first bit frequency 236. The first bit frequency 236 may correspond to the bit frequency for transmitting bits of a CAN frame according to the classic CAN protocol. In an example, the bits of the ACK field 174 and the bits of the EOF field 146 may be transmitted at the first bit frequency 236. As can be seen from Figure 4, the EOF field 146 comprises seven bits. The seven bits of the EOF field 146 are basically each recessive bits.

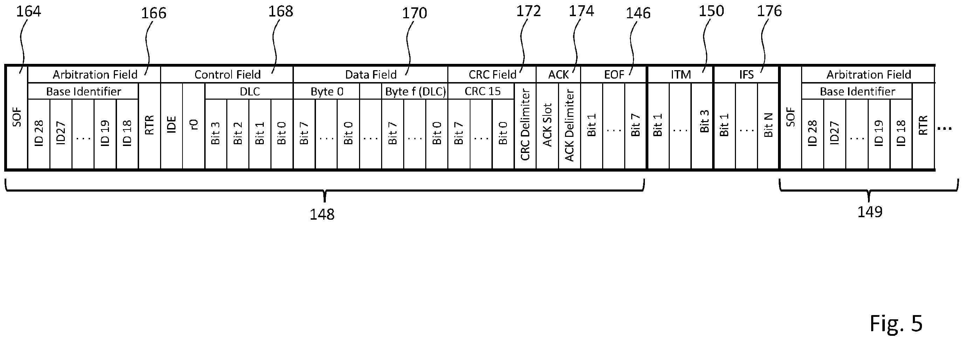

Figure 5 schematically illustrates another example of the first CAN frame 148. The first CAN frame 148 shown in Figure 5 may be a CAN frame 148 according to the Classical CAN protocol. Also in this embodiment, the first CAN frame 148 may comprise, for example: a SOF bit 164, an arbitration field 166, a control field 168, a data field 170, a CRC field 172, an ACK field 174, and an EOF field 146. Further details on the structural design of a CAN frame 148 according to the classical CAN protocol can be obtained from the associated standard. If the first CAN frame 148 is configured according to the Classical CAN protocol, the bits of the first CAN frame 148 may be transmitted at the first bit frequency 236. As can be seen from Figure 5, the EOF field 146 comprises seven bits. The seven bits of the EOF field 146 are basically each recessive bits.

In the example shown in Figure 5, intermission, ITM, bits directly follow the EOF field 146. The ITM bits may form the so-called ITM field 150. In an example, the ITM field 150 comprises three bits. The three bits of the ITM field 150 are basically each recessive bits. In particular, the ITM field 150 does not form part of the first CAN frame 148.

In the example shown in Figure 5, an interframe frame space, IFS, field 176 directly adjoins the ITM field 150. The IFS field 176 can represent an idle phase. The IFS field 176 may comprise any number N of bits, each of which is basically a recessive bit. In particular, the IFS field 176 does not form part of the first CAN frame 148.

In the example shown in Figure 5, a further, first CAN frame 149 adjoins the IFS field 176. The further, first CAN frame 149 is only partially and schematically shown in Figure 5. The further, first CAN frame 149 may be configured analogously to the first CAN frame 148.

A CAN system 100 is shown schematically in Figure 1. The CAN system 100 may comprise a plurality of CAN devices 102. Each CAN device 102 may be coupled to the CAN bus 104. In order to save electrical energy, the CAN controller 114 and/or the microcontroller 110 of a CAN device 102 may change from an active operating state to a deactivated state, also referred to as a sleep state. In the sleep state, the CAN controller 114 and/or the microcontroller 110 of the CAN device 102 consumes less electrical energy than in the active operating state. In order to change from the sleep state back to the active operating state, the CAN controller 114 and/or the microcontroller 110 may be woken up by the CAN transceiver 120 of the associated CAN device 102. The wake-up may be performed via a wake-up signal.

In an example, one of the CAN devices 102 of the CAN system 100 may be configured to generate a CAN bus signal representing a CAN frame 148 on the CAN bus 104. The CAN transceivers 120 of the other CAN devices 102 may receive the CAN frame 148 represented by the bus signal. In principle, it would be possible for each CAN transceiver 102 to send a wake-up signal to the CAN controller 114 and/or microcontroller 110 of the associated CAN device 102 in response to the received CAN frame 148 to cause a change from the sleep state to the active operating state, respectively. In an example, a first section 162 of the bus signal 142 representing a pattern 178 referred to as a reference pattern 178 of a predefined sequence of bits may be detected by each CAN transceiver 120. In response to the detection of the reference pattern 178, each CAN transceiver 120 may transmit the wake-up signal to the CAN controller 114 and/or microcontroller 110 of the respective associated CAN device 102.

By using the bits represented in the first section 162 at the beginning of a CAN frame, it may turn out that the SOF bit 164 and the bits of the arbitration field 166 are used not for the dedicated purpose only but also for the purpose of the reference pattern 178.

It may be desirable not to wake up all CAN controllers 114 or microcontrollers 110 of all CAN devices 102, but to wake up only a predetermined group of CAN controllers 114 or microcontrollers 110 (of respective associated devices 102). In other words, it may be desirable to be able to specifically wake up a partial group of the CAN devices 102 or associated CAN controllers 114 or microcontrollers 110.

As can be deduced from the following explanations, it is possible to integrate at least one wake-up pulse 152 in a silent section 144 of the bus signal 142, wherein the silent section 144 of the bus signal 142 represents the EOF field 146 and/or the ITM field 150. The wake-up pulse 152 may be integrated into the silent section 144 of the bus signal 142 in such a way that the wake-up pulse 152 is not evaluated by the receiver unit 136 of the CAN transceiver 120 as a representation of a dominant bit. In the silent section 144, only recessive bits should be represented by the bus signal 142. In simplified terms, the receiver unit 136 of the CAN transceiver 120 in the silent section 144 exclusively checks whether the differential voltage of the silent section 144 of the bus signal 142 is less than a second threshold voltage TH2. The second threshold voltage TH2 may be between 0.5 V and 0.9 V. In an example, the second threshold voltage TH2 is 0.7 V. In an example, if the differential voltage of the silent section 144 of the bus signal 142 is less than the second threshold voltage TH2, then the receiver unit 136 of the CAN transceiver 120 may detect the silent section 144 of the bus signal 142 as a plurality of recessive bits (of the EOF field 146 and/or the ITM field 150) even if at least one wake-up pulse 152 is included in the silent section 144 of the bus signal 142. As an effect, the at least one wake-up pulse 152 in the silent section 144 of the bus signal 142 may be not visible to the receiver unit 136 of the CAN transceiver 120. The wake-up pulse 152 may be detected only by a particular group of CAN transceivers 120, each comprising a wake-up unit 140.

Figure 2 schematically illustrates an example of a CAN transceiver 120, wherein the CAN transceiver 120 comprises the TXD interface 128, the RXD interface 130, the bus interface 132, the transmitter unit 138 and the receiver unit 136. The bus interface 132 is configured to receive a first differential voltage signal, referred to as the bus signal 142, from the CAN bus 104 via the bus interface 132. The CAN transceiver 120 further comprises a wake-up unit 140. The wake-up unit 140 is preferably coupled to the bus interface 132. In an example, the wake-up unit 140 may receive the bus signal 142 via the bus interface 132. The wake-up unit 140 is configured to detect the silent section 144 of the bus signal 144. The silent section 144 of the bus signal 142 represents the EOF field 146 of the first CAN frame 148 and/or the ITM field 150 directly following the EOF field 146.

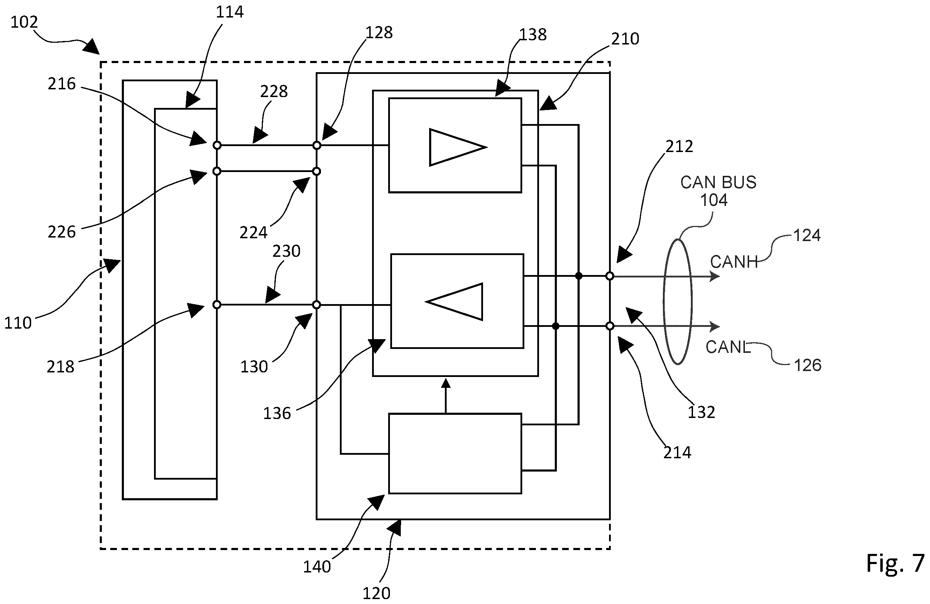

The wake-up unit 140 is configured to detect, in the silent section 144 of the bus signal 142, at least one wake-up pulse 152 comprising a differential bus voltage Vw1 that is less than a first predefined negative threshold voltage TH1. The first threshold voltage TH1 may be between -0.2 V and -0.45 V. In an example, the first threshold voltage TH1 is -0.4 V. The wake-up unit 140 is configured to cause a wake-up signal to be sent in response to the at least one detected wake-up pulse 152. The wake-up signal may represent a wake-up command. The wake-up command may be used to wake up the CAN controller 114 and/or the microcontroller 110. In an example, the wake-up unit 140 may send the wake-up signal via a further interface 220 of the CAN transceiver 120. The further interface 220 may be referred to as the first wake-up interface 220. In another example, the wake-up unit 140 may be configured to send the wake-up signal via the RXD interface 130 of the CAN transceiver 120. Figure 7 schematically illustrates a corresponding embodiment of the CAN transceiver 120. In the following, reference is again made to the example in Figure 2, wherein the explanations relating to Figure 2 may apply analogously to the example in Figure 7, and vice versa.

Against the background of the preceding explanations, it may be summarized in simplified terms that the wake-up unit 140 detects the silent section 144 of the bus signal. If the wake-up unit 140 detects at least one wake-up pulse 152 in the silent section 144, then the wake-up unit 140 will directly or indirectly send or cause to sent a wake-up signal in response to the detection of the at least one wake-up pulse 152. The wake-up signal is used to wake up the CAN controller 114 and/or microcontroller 110, particularly if the CAN transceiver 120 and the wake-up CAN controller 114 and/or the microcontroller 110 belong to the same CAN device 102. In an example, a selected group of CAN devices 102 from a larger group comprising a plurality of CAN devices 102 may each comprise the wake-up unit 140. As an effect, the selected group of CAN devices 102 may form a partial network via the CAN bus 104 whose CAN controllers 114 and/or microcontrollers 110 may be woken up as a result of the at least one wake-up pulse 152 incorporated in the silent section 144 of the bus signal. For the other CAN devices 102 whose CAN transceivers 120 do not comprise the previously explained wake-up unit 140, the at least one wake-up pulse 152 integrated in the silent section 144 may be invisible.

In an example, a single wake-up pulse 152 may be understood to be an embodiment of a wake-up pattern 160. In another example, it may be understood that the wake-up pattern 160 comprises at least one wake-up pulse 152 or multiple wake-up pulses 152. Figure 3 schematically illustrates a wake-up pattern 160, which in an example may be referred to as the first wake-up pattern 194. The first wake-up pattern 194 may comprise exactly two wake-up pulses 152. Each of the two wake-up pulses 152 may be integrated into the silent section 144 of the bus signal 142, which silent section 144 represents the EOF field 146 and/or the ITM field 150. In principle, the first wake-up pattern 194 may also be designed differently, in particular comprising more or less wake-up pulses 152.

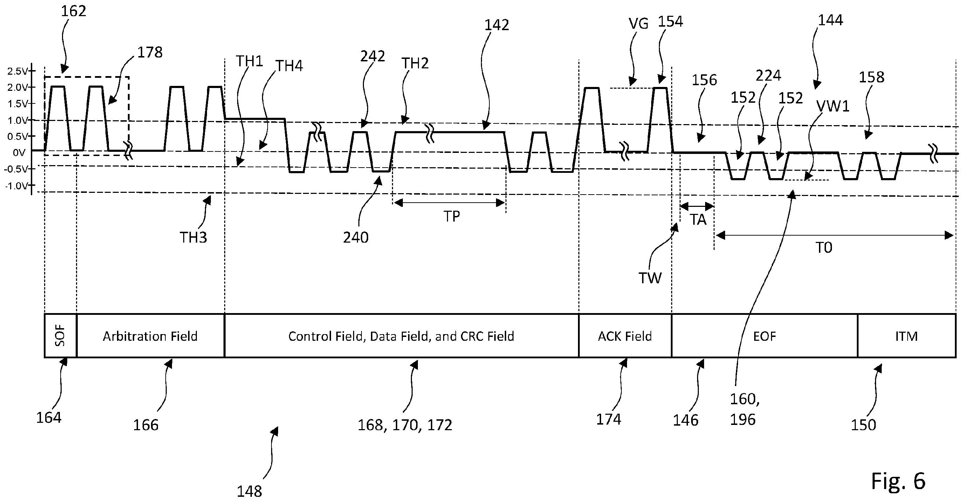

Figure 6 schematically illustrates a further example of the bus signal 142. The bus signal 142 in Figure 6 differs from the bus signal 142 in Figure 3 in that a different wake-up pattern 160 is integrated into the silent section 144 of the bus signal 142. The wake-up pattern 160 of Figure 6 may be an example of a second wake-up pattern 196. The second wake-up pattern 196 may comprise, for example, exactly four wake-up pulses 152.

In an example, the bus signal 142 of Figure 3 may represent the first CAN frame 148. In an example, the CAN frame 148 may be a CAN frame according to the CAN XL protocol. An example of such a first CAN frame 148 is shown schematically in Figure 4. The bits of the data field 170 are represented by different pulses 240, 242, which are formed by the bus signal 142. The pulse 240 may also be referred to as the first data pulse 240. The pulse 242 may also be referred to as the second data pulse 242. In an example, the differential bus voltage of the first data pulse 240 may at least approximately correspond to the differential bus voltage Vw1 of the wake-up pulse 252, and/or vice versa. The differential bus voltage of the second data pulse 242 may be greater than the fourth threshold voltage TH4. In an example, the fourth threshold voltage TH4 is between -0.1 V and 0.1 V. For example, the fourth threshold voltage TH4 may be 0 V.

Although the differential bus voltage of the first data pulse 240 may be approximately equal to the differential bus voltage VW1 of the wake-up pulse 152, the wake-up unit 140 will not detect or evaluate the first data pulse 240 as a wake-up pulse 142. In an example, the wake-up unit 140 is configured to detect the at least one wake-up pulse 152 exclusively in the silent section 144 of the bus signal 142. Therefore, only the silent section 144 of the bus signal 142 is considered for the wake-up unit 140 in order to detect for the at least one wake-up pulse 142. In particular, the wake-up unit 140 will therefore not search for a wake-up pulse 152 in the data field 170 and will not be able to detect a wake-up pulse 152 in the data field 170. In other words, in an example, the wake-up unit 140 may be configured to exclusively monitor the silent section 144 of the bus signal 142 for the at least one wake-up pulse 142. As an effect, the wake-up unit 140 may robustly detect the at least one wake-up pulse 152.

Previously, it was explained that the differential bus voltage VW 1 of the wake-up pulse 152 may be approximately equal to the differential bus voltage of the first data pulse 240. The differential bus voltage of the first data pulse 240 is selected such that as little electromagnetic interference as possible is caused on the CAN bus 104. As an effect, the same advantage also applies to the wake-up pulse 152, which also causes a low electromagnetic interference on the CAN bus 104. In an example, the differential bus voltage VW1 of the wake-up pulse 152 is between the first threshold voltage TH1 and a third predefined negative threshold voltage TH3. The third threshold voltage TH3 may be between -0.8 V and -2 V. Due to the voltage range between the first threshold voltage TH1 and the third threshold voltage TH3 for the differential bus voltage VW 1 of the wake-up pulse 152, it may be achieved in an example that no excessive electromagnetic interference is caused on the CAN bus 104.

Integration of at least one wake-up pulse 152 into the silent section 144 of the bus signal 142 may be understood to mean, in particular, that the silent section 144 of the bus signal 142 forms the at least one wake-up pulse 152.

By integrating the at least one wake-up pulse 152 into the silent section 144 of the bus signal 142, it may be achieved as an effect and advantage that no additional bandwidth is required on the CAN bus 104 for the at least one wake-up pulse 152. Therefore, the integration of the at least one wake-up pulse into the silent section 144 of the bus signal 142 can be realized in an example without disadvantages for the data transmission rate. As a further advantage, the integration of the at least one wake-up pulse 152 into the silent section 144 prevents a potential collision with other frames and/or bus signals.

Previously, it was explained that the wake-up unit 140 is configured to cause the wake-up signal in response to detecting the at least one detected wake-up pulse 152. In an example, the wake-up unit 140 may be coupled to the first wake-up interface 220 such that the wake-up unit 140 may send the wake-up signal via the first wake-up interface 220. In an example, the first wake-up interface 220 may be coupled to the second wake-up interface 222 of the CAN controller 114. In another example, the first wake-up interface 220 may be coupled to, for example, a power supply unit of the CAN device 102 such that the power supply unit is controllable by the wake-up unit 140 via the wake-up signal. In an example, the power supply unit of the device 102 may supply an electrical voltage to the microcontroller 110 and/or the CAN controller 114 in response to receiving the wake-up signal. By supplying the electrical voltage, the microcontroller 110 and/or the CAN controller 114 may change from a deactivated state to an activated state.

The transceiver 120, in an example, is configured to change from an activated (operational) state to a (deactivated) sleep state. The transceiver 120 may also change from the sleep state back to the activated operational state. The transceiver 120 may be fully functional in the operational state. The transceiver 120 may have individual subunits deactivated in the sleep state. By deactivating a subunit of the transceiver 120, less electrical energy is consumed by the transceiver 120. In the sleep state of the transceiver 120, the receiver unit 136 and/or the transmitter unit 138 may be deactivated. By deactivating the receiver unit 136, a consumption of electrical energy of the transceiver 120 is reduced. By deactivating the transmitter unit 138, the consumption of electrical energy of the transceiver 120 can also be reduced. In the sleep state of the transceiver 120, in an example, the receiver unit 136, the transmitter unit 138 and, in particular, other units of the transceiver 120 may be deactivated. This can further improve the saving of electrical energy during the sleep state. By deactivating the receiver unit 136, the receiver unit 136 is not capable of generating a signal at the first RXD interface 130 that is used to wake up the CAN controller 114. The receiver unit 136 and/or the transmitter unit 138 of the transceiver 120 are, in particular, only activated when the transceiver 120 is in an operational state.

In an example, the transceiver 120 is configured such that the wake-up unit 140 is activated in the sleep state of the transceiver 120. In the active state of the wake-up unit 140, the wake-up unit 140 may, for example, perform the steps previously explained, such as detecting a silent section 144 of the bus signal 142, detecting a wake-up pulse 152 in the silent section 144, and/or causing a wake-up signal in response to detecting a wake-up pulse 152. The wake-up unit 140, which is active during the sleep state of the transceiver 120, offers the advantage that the wake-up unit 140 can directly or indirectly wake up the CAN controller 114 and/or the microcontroller 110 via the wake-up command represented by the wake-up signal. In particular, the wake-up unit 140 may be operational active even if the receiver unit 136 and/or the transmitter unit 138 are deactivated in the sleep state of the transceiver 120. In other words, the wake-up unit 140 may be used to monitor the bus signal 142 with respect to a wake-up pulse 152 in a silent section 144 and cause the CAN controller 114 and/or the microcontroller 110 to wake up if necessary. The wake-up unit 140 may be configured such that the active wake-up unit 140 consumes less electrical power than an activated receiver unit 136 and/or an activated transmitter unit 138. If the transceiver 120 is in a sleep state while the receiver unit 136 and/or the transmitter unit 138 are deactivated, electrical power may be saved despite the activated wake-up unit 140 without waiving the ability to wake up the CAN controller 114 and/or the microcontroller 110.

In an example, the wake-up unit 140 may be coupled to the receiver unit 136 and/or the transmitter unit 138. The wake-up unit 140 may be configured to directly or indirectly control the receiver unit 136 and/or the transmitter unit 138 in response to detecting a wake-up pulse 152 such that the receiver unit 136 and/or the transmitter unit 138 are activated. In an example, the wake-up unit 140 may be coupled to the receiver unit 136 and/or the transmitter unit 138 such that the wake-up unit 140 may send an activation signal to the receiver unit 136 and/or the transmitter unit 138 representing a command to activate. The receiver unit 136 and/or the transmitter unit 138 may each be configured to activate in response to receiving the activation signal. In an example, the transceiver 120 may comprise a main unit 210, wherein the main unit 210 comprises the receiver unit 136 and/or the transmitter unit 138. In an example, the main unit 210 may be activated or deactivated. The wake-up unit 140 may be coupled to the main unit 210 such as to transmit the activation signal to the main unit 210. The main unit 210 may be configured to supply the receiver unit 136 and/or the transmitter unit 138 with an operating voltage in response to receiving the activation signal. By supplying the operating voltage, the receiver unit 136 and/or the transmitter unit 138 may be activated.

Figure 3 schematically illustrates an example of the bus signal 142. Below the bus signal 142, an example of a first CAN frame 148 is shown schematically in Figure 3. Sections of the bus signal 142 may be assigned to one or more fields of the first CAN frame 148 by means of several vertical dashed lines. The corresponding sections of the bus signal can represent the bits of the respective assigned fields. At this point, it should be noted once again that the bus signal is only shown schematically in Figure 3, and in particular not all parts of the bus signal 142 are shown in Figure 3.

In an example, the silent section 144 of the bus signal may represent either only a combination of the EOF field 146 and the ITM field 150, or only the EOF field 146 or only the ITM field 150. In an example, the silent section 144 of the bus signal 142 could represent only the EOF field 146 or only the ITM field 150. Figure 3 schematically illustrates another example in which the silent section 144 of the bus signal 142 only represents the combination of the EOF field 146 and the ITM field 150 directly following the EOF field 146. The EOF field 146 may comprise 7 bits, in particular exactly 7 bits, of the first CAN frame 148. The ITM field 150 may comprise 3 bits, in particular exactly 3 bits. The ITM field 150 can follow directly to the EOF field 146. In an example, the ITM field 180 does not form part of the first CAN frame 148.

In an example, a so-called interframe space, IFS, 176 may directly adjoin the ITM field 150. The interframe space 176 may extend from the ITM field 150 to a further first CAN frame 149. The interframe space 176 may be represented by the bus signal 142. During the interframe space 176, the bus voltage of the bus signal 142 may be at least substantially 0 V. Against this background, it may be assumed in an example that the interframe space 176 comprises one recessive bit or more recessive bits. In an example, the silent section 144 of the bus signal 142 represents the EOF field 146, the ITM field 150 following the EOF field 146, and/or the interframe space 176 following the ITM field 150.

As can be seen in an example from the signal waveform of the bus signal 142 of Fig. 3, the silent section 144 of the bus signal 142 may directly follow the trigger pulse 154 of the bus signal 142. The trigger pulse voltage VG of the trigger pulse 154 is preferably greater than the second threshold voltage TH2. The bus voltage in the silent section 144 of the bus signal 142 is always less than the second threshold voltage TH2. At the transition from the trigger pulse 154 to the silent section 144, there may be a brief oscillation, in particular undershoot, of the bus voltage. In an example, it should be assumed that the short-term oscillation only occurs during the waiting time TW, which directly follows the trigger pulse 154. A base section 156 of the bus signal 142 may directly follow after the waiting time TW. The bus voltage of the base section 156 of the bus signal 142 may be at least substantially 0 V. The base section 156 may be followed directly by an observation section 158 of the bus signal 142. The base section 156 and the subsequent observation section 158 may each form part of the silent section 144 of the bus signal 142. In an example, the silent section 144 of the bus signal 142 is formed from the base section 156 and the subsequent observation section 158. In another example, the silent section 144 may further comprise the section of the bus signal 142 during the waiting time TW.

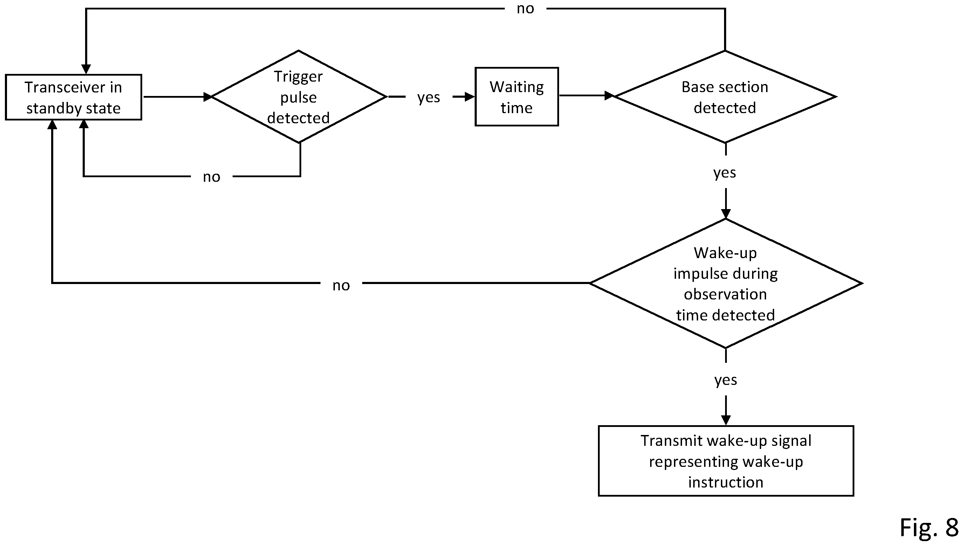

Figure 8 schematically illustrates an example of a flowchart for the transceiver 120. The transceiver 120, if in the sleep state, may provide that the receiver unit 136 and/or the transmitter unit 138 are deactivated. During the sleep state of the transceiver 120, the wake-up unit 140 may be active. The wake-up unit 140 may be coupled to the bus interface 132 so that the bus signal 142 may be received by the wake-up unit 140 via the bus interface 132. The wake-up unit 140 may be configured to detect, based on the bus signal 142, a trigger pulse 154 comprising a differential bus voltage VG of the bus signal 142 that is greater than the second threshold voltage TH2. The trigger pulse 154 may, for example, comprise a time duration of at least 0.5 µs to 5 µs. The second threshold voltage TH2 is a predefined, positive threshold voltage. In an example, the second threshold voltage TH2 may be between +0.5 V and +0.9 V. In an example, the second threshold voltage TH2 may be +0.9V.

The example of the bus signal 142 from Figure 3 schematically shows that the bus signal 142 can theoretically comprise a plurality of trigger pulses 154. The trigger pulse 154 can therefore not be used alone to robustly detect a subsequent silent section 144. Based on the example flowchart of Figure 8, the detection of the trigger pulse 154 may be followed by the waiting time TW. The wake-up unit 140 may be configured to wait for the waiting time TW, which follows the trigger pulse 154. The waiting time TW may be a predefined time. In an example, the waiting time TW may be between 0.01 µs and 2 µs, in particular between 0.1 µs and 1.3 µs. During the waiting time TW, oscillations of the bus signal 142 can occur, which can be ignored by the wake-up unit 140, in particular if the oscillations relate to undershoots. Ignoring the possible oscillations of the bus signal 142 during the waiting time TW improves the robustness for detecting a wake-up pulse 152.

Based on the example of the flowchart of Figure 8, after the waiting time TW has been waited, a check may be performed to determine whether the waiting time TW is followed by a base section 156 of the bus signal 142. In an example, the wake-up unit 140 may be configured to detect the base section 156 of the bus signal 142 based on the bus signal 142. The base section 156 comprises a differential bus voltage that is between the first threshold voltage TH1 and the second threshold voltage TH2 during a predefined base time TA. The base time TA directly follows the waiting time TW. If a base section 156 actually follows the waiting time TW, then the differential bus voltage of the base section 156 is neither less than the first threshold voltage TH1 nor greater than the second threshold voltage TH2. As an effect, it may be determined by the detection of the base section 156 that neither a pulse corresponding to the trigger pulse 154 nor a pulse corresponding to the wake-up pulse 152 has occurred in the base section 156. Therefore, no first data pulse 240 can have occurred in the base section 156.

The base section 156 lasts for the predefined base time TA. In an example, the base time TA may be between 2 µs and 7 µs. In another example, the base time TA may be predefined in relation to the bit frequency 236 used to transmit the SOF bit 164, the bits of the arbitration field 166, the bits of the ACK field 174, and/or the bits of the EOF field 146. In an example, the base time TA may be two to seven times a cycle time according to the aforementioned bit frequency 236. If the first CAN frame 148 is configured as a CAN frame according to the CAN XL standard, then the bits of the data field 170 may be represented by first data pulses 240 of the bus signal 142 and second data pulses 242 of the bus signal 142. According to the CAN XL standard, a so-called stuffing bit is performed at the latest after ten equal (either first or second) data pulses 240, 242. In an example, ten consecutive second data pulses 242 are followed by a first data pulse 240, which in this example represents the stuffing bit. The time TP of the ten consecutive second data pulses 242 is ten times the simple cycle time according to the second bit frequency 238. In an example, the time TP may be about 1.25 µs. As an effect, a first data pulse 240 is generated at the latest after 1.25 µs during the transmission of the bits of the data field 170, wherein the differential bus voltage of the first data pulse 240 is less than the first threshold voltage TH1. Against this background, the predefined base time TA should be considered again. During the base time TA, the base section 156 of the bus signal 142 comprises a differential bus voltage that is neither less than the first threshold voltage TH1 nor greater than the second threshold voltage TH2. The base time TA may, for example, be between 2 µs and 7 µs. As an effect, it may be determined that no transmission of bits of the data field 170 is performed during the base time TA. As a further effect, it may be determined that no second data pulse 242 occurs during the base time TA.

In the two previously paragraphs, it was determined as a result that no trigger pulse 154, no wake-up pulse 152, no first data pulse 240, and also no second data pulse 242 can occur in the base section 156 that lasts a base time TA. As another effect, it may be noted that a potential observation section 158 of the bus signal 142 that may follow the base section 156 of the bus signal 142 may not serve to represent bits of the data field 170.

Based on the example flowchart of Figure 8, after the wake-up unit 140 detects the base section 156, a check may be performed to determine whether an observation section 158 follows the base section 156. In the event that the wake-up unit 140 has not detected the base section 156, the wake-up unit 140 may abort the check.

In an example, the wake-up unit 140 is configured to detect the observation section 158 based on the bus signal 142. The observation section 158 comprises a differential bus voltage that is less than the second threshold voltage TH2 during a predefined observation time T0. The observation time T0 directly follows the base time TA. If an observation section 158 actually follows the base section 156, then the differential bus voltage of the observation section 158 is always less than the second threshold voltage TH2. In an example, the observation time T0 may be between 5 µs and 7 µs. In another example, the observation time T0 may be predefined in relation to the first bit frequency 236 used to transmit the SOF bit 164, the bits of the arbitration field 166, the bits of the ACK field 174, and/or the bits of the EOF field 146. In an example, the observation time T0 may be five to seven times a cycle time according to the first bit frequency 236. In another example, the base time TA and the observation time T0 in total may be eleven times the cycle time of the first bit frequency 236. As an effect, it may be assumed that no bits of the following fields or bits of the first CAN frame 148 are represented in the base section 156 and the subsequent observation section 158: SOF 164, arbitration field 166, control field 168, data field 170, CRC field 172, ACK field 174.

During the base time TA and during the observation time T0, the bus signal 142 comprises a differential bus voltage that is always less than the second threshold voltage TH2. The base section 156 and the observation section 158 may form the silent section 144. The silent section 144 may further comprise the section of the bus signal 142 during the waiting period TW. In light of the foregoing explanations, it may be noted as an effect that the silent section 144 may represent the EOF field 146 and/or the ITM field 150. A wake-up pulse 152, which may be included in the observation section 158 of the bus signal 142, is invisible to known transceivers 120 and/or to the receiver unit 136. However, this invisibility does not apply to the wake-up unit 140. The wake-up unit 140 is configured to detect the at least one wake-up pulse 152 in the observation section 158 of the bus signal 142. Each wake-up pulse 152 comprises a differential bus voltage that is less than the first threshold voltage TH1. Each wake-up pulse 152 may comprise a time between 0.01 µs and 10 µs. In particular, if each wake-up pulse 152 comprises a time that is less than the cycle time of the first bit frequency 236, a plurality of wake-up pulses 152 may be included in the observation section 158. In an example, each wake-up pulse 152 may comprise a time that is between 0.05 µs and 5 µs, in particular between 0.05 µs and 3 µs.

Based on the example of the flowchart of Figure 8, after the at least one wake-up pulse 152 is detected, the wake-up signal may be caused, in particular generated, by the wake-up unit 140. In the case where the wake-up unit 140 does not detect a wake-up pulse 152 in the observation section 158, the wake-up unit 140 may terminate the check.

In an example, the wake-up unit 140 is configured to detect a predefined wake-up pattern 160 in the silent section 144, in particular in the observation section 158. In an example, the wake-up pattern 160 may be the first wake-up pattern 194 as schematically illustrated in Figure 3. In another example, the wake-up pattern 160 may be the second wake-up pattern 196 as schematically illustrated in Figure 6.

The wake-up pattern 160 may comprise a plurality of wake-up pulses 152. In an example, the wake-up pattern 160 may comprise at least two, three, five or ten wake-up pulses 152. For each wake-up pulse 152 of the wake-up pattern 160, reference may be made to the preceding explanations, preferred features, technical effects, and advantages in an analogous manner as previously described for the wake-up pulse 152. For example, each wake-up pulse 152 of the wake-up pattern 160 comprises a differential bus voltage VW1 that is less than the first threshold voltage TH1. The plurality of wake-up pulses 152 of the wake-up pattern 160 may each be separated by a signal section 224 of the bus signal 142, referred to as a separation section 224, in which the differential bus voltage is greater than the first threshold voltage TH1 and less than the second threshold voltage TH2. The differential bus voltage of each separation section 224 may be approximately 0 V. In an example, the wake-up pulses 152 of the wake-up pattern 160 are not arranged in direct succession. Each separation section 224 may also form a part of the wake-up pattern 160. In an example, the wake-up pattern 160 is formed of a plurality of wake-up pulses 152 and a plurality of separation sections 244.

Previously, it was explained that the wake-up unit 140 may be configured to cause the wake-up signal in response to detecting the at least one wake-up pulse 152. In an example, the wake-up unit 140 is configured such that a single wake-up pulse 152 is not sufficient to cause the wake-up signal. In an example, the wake-up unit 140 may be configured to cause the wake-up signal to be sent via an interface of the transceiver 120 in response to detection of the wake-up pattern 160.

In an example, the wake-up unit 140 may be coupled to the first wake-up interface 220. In this case, the wake-up unit 140 may generate and send the wake-up signal via the first wake-up interface 220. In another example, the wake-up unit 140 may be coupled to the RXD interface 130. Figure 7 schematically illustrates an example of the transceiver 120 wherein the wake-up unit 140 is coupled to the RXD interface 130. In this case, the wake-up unit 140 may generate and send the wake-up signal via the RXD interface 130. In another example, the wake-up unit 140 may be directly or indirectly coupled to the receiver unit 136. In an example, the wake-up unit 140 may control the receiver unit 136 such that the wake-up signal is sent from the receiver unit 136 via the RXD interface 130. As a result, the wake-up unit 140 causes the receiver unit 136 to send the wake-up signal. However, the sending is caused by the controlling of the receiver unit 136 by the wake-up unit 140.

If the CAN transceiver 120 is configured according to the CAN XL standard, then the receiver unit 136 may be configured to detect the SOF bit 164, a bit of the arbitration field 166, a bit of the ACK field 174, a bit of the EOF field 146 solely on whether the bus voltage of the bus signal 142 representing the respective bit is either greater than the second threshold voltage TH2 or less than the second threshold voltage TH2. If the bus voltage is greater than the second threshold voltage TH2, then the receiver unit 136 evaluates the bus voltage as a representation of a dominant bit. If the bus voltage is less than the second threshold voltage TH2, then the receiver unit 136 evaluates the bus voltage as a representation of a recessive bit. A wake-up pulse 152, which is integrated into the silent section 144 of the bus signal 142, comprises a bus voltage that is less than the first threshold voltage TH1. The first threshold voltage TH1 is less than the second threshold voltage TH2. The silent section 144 may represent at least a section of the EOF field 146. If the wake-up pulse 152 occurs while the bus signal 142 represents at least a section of the EOF field 146, then the receiver unit 136 will determine that the bus voltage of the bus signal is less than the second threshold voltage TH2. As an effect, the receiver unit 136 will evaluate the wake-up pulse 152 as a representation of a recessive bit. As a further effect, the integration of the at least one wake-up pulse 152 into the silent section 144 of the bus signal 142 remains invisible to the receiver unit 136. The preceding explanations apply in particular if the silent section 144 of the bus signal 142 is received by a receiver unit 136 that is activated rather than deactivated. If the receiver unit 136 is deactivated, then it may be provided that the receiver unit 136 does not evaluate the silent section 144 of the bus signal 142.

The receiver unit 136 may be configured, if the receiver unit 136 is activated, to generate an RXD signal at the first RXD interface 130 based on the bus signal 142 representing the first CAN frame 148, such that the RXD signal represents the first CAN frame 148. The wake-up unit 140 may be configured to control the receiver unit 136 such that a wake-up pulse 152 incorporated in a silent section 144 of the bus signal 142 representing the EOF field 146 is evaluated as a recessive bit by the receiver unit 136 and/or is represented as a recessive bit by the RXD signal. As an effect, this may prevent the at least one wake-up pulse 152 from resulting in an error signal at the RXD interface 130 and/or at the bus interface 132.

In another example, the wake-up unit 140 may be configured to detect a first section 162 of the bus signal 142 representing the SOF bit 164 and/or the arbitration field 166. In an example, the wake-up unit 140 may be configured to detect a predefined reference pattern 178 represented by the first section 162 of the bus signal 142. The reference pattern 178 is not to be confused with and different to the previously explained wake-up pattern 152. The reference pattern 178 does not comprise a voltage that is less than the first threshold voltage TH1. Detecting the reference pattern 178 may be used as a prerequisite to start the check for the wake-up pattern 152, for example according to the flowchart of Figure 8. The wake-up unit 140 may therefore be configured to perform the detection of the wake-up pulse 152 and/or the causing of the wake-up signal only if the reference pattern 178 has been detected beforehand. This can improve the robustness for detecting the wake-up pattern 152 against possible interference signals on the CAN bus 104.

It was previously explained that the wake-up unit 140 is configured to cause the wake-up signal to be sent via an interface, in particular the first wake-up interface 220, in response to the detection of at least one wake-up pulse 152. The first wake-up interface 220 may be coupled to a second wake-up interface 222 of the CAN controller 114. The CAN controller 114 may be configured to change from the inactive state to the active operational state in response to the received wake-up signal. In one example, a CAN device 102, as also schematically illustrated in Figure 2, comprises the CAN transceiver 120 and the CAN controller 114. In an example, the CAN device 102 may comprise the microcontroller 110, wherein the CAN controller 114 may be implemented by the microcontroller 110.

Figure 1 schematically illustrates an example of a CAN system 100. The system 100 may comprise a plurality of CAN devices 102 coupled via a CAN bus 104. One of the CAN devices 102 may cause a bus signal 142 on the CAN bus 104. The bus signal 142 may be received by the other CAN devices 102. If one of the CAN devices 102 receiving the bus signal 142 comprises a CAN transceiver 120 including a wake-up unit 140, the CAN controller 114 of the same CAN device 102 may be woken up by a wake-up signal caused by the wake-up unit 140. However, this requires that at least one wake-up pulse 152 is integrated into a silent section 144 of the bus signal 142. The CAN transceiver 120 of the CAN device 102, which causes the bus signal 142 on the CAN bus 104, should therefore have the ability to integrate the at least one wake-up pulse 152 in the silent section 144 of the bus signal 142.

Reference is made below to the aspect of how a CAN transceiver 120 may have the ability to integrate the wake-up pulse 152 into the silent section 144 of the bus signal 142. In an example, if the CAN transceiver 120 is activated, the CAN transceiver 120 may be configured to receive a control command via an interface of the CAN transceiver 120 other than the bus interface 132. The control command may indicate the sending of the wake-up pulse 152 and/or the integration of the wake-up pulse 152 into the bus signal 142. The CAN transceiver 120 may be activated if the transmitter unit 138 and/or the receiver unit 136 are activated. The other interface of the CAN transceiver 120 may be referred to as the first control interface 224. The first control interface 224 may be other than the first TXD interface 128 and/or the first RXD interface 130 and/or first wake-up interface 220. The first control interface 224 may be coupled to a second control interface 226 via a signal connection. The CAN controller 114 may be configured to generate the control command. In an example, the CAN controller 114 may send a control signal from the second control interface 226 to the first control interface 224, wherein the control signal represents the control command.

The CAN transceiver 120 may, in an example, be configured to receive, via the first TXD interface 128, a TXD signal representing a CAN frame. This CAN frame is to be referred to as the second CAN frame. The TXD signal and/or the second CAN frame do not represent the at least one wake-up pulse 158. The CAN transceiver 120 may be configured to generate a bus signal 142 at the CAN BUS interface 132 such that the bus signal 142 represents the second CAN frame. However, in response to receiving the control command, the CAN transceiver 120 adapts the bus signal 142 such that a silent section 144 of the bus signal 142 representing the EOF field 146 of the second CAN frame and/or a directly following the ITM field comprises at least one wake-up pulse 152. The bus signal 142 is transmitted from the other CAN transceiver 120 to the CAN transceivers 120 of the other CAN devices 102 via the CAN bus 104. If at least one of the CAN transceivers 120 receiving the bus signal 142 comprises a wake-up unit 140, the corresponding wake-up unit 140 may detect the wake-up pulse 152. The CAN transceiver 120 receiving the bus signal 142 may be considered to receive the bus signal 142 representing the first CAN frame 148. In this case, the second CAN frame can correspond to the first CAN frame.

It has already been explained in connection with Figures 3 and 6 that several different wake-up patterns 194, 196 may be used. The different wake-up patterns 194, 196 may be used to form different partial networks in a CAN system 100.

Figure 1 schematically illustrates an example of a CAN system 100. The CAN system 100 comprises a plurality of CAN devices 102. Each CAN device 102 comprises a CAN transceiver 120. One CAN transceiver 120 of the plurality of CAN transceivers 120 may be referred to as a first CAN transceiver 186. Another CAN transceiver 120 of the plurality of CAN transceivers 120 may be referred to as a second CAN transceiver 188. A CAN device 102 comprising the first CAN transceiver 186 may be referred to as a first CAN device 198. A CAN device 102 comprising the second CAN transceiver 188 may be referred to as a second CAN device 200.

In an example, the wake-up unit 140 of the first CAN transceiver 186 is configured to be capable of detecting a first wake-up pattern 194 as the wake-up pattern 160. The wake-up unit 140 of the first CAN transceiver 186 may further be configured to not detect the second wake-up pattern 196 as a wake-up pattern 160, and/or to be able to exclusively detect the first wake-up pattern 194 as a wake-up pattern 160.

In an example, the wake-up unit 140 of the second CAN transceiver 188 is configured to be able to detect a second wake-up pattern 196 as a wake-up pattern 160. The second wake-up pattern 196 is different from the first wake-up pattern 194. The wake-up unit 140 of the second CAN transceiver 188 may further be configured to not detect the first wake-up pattern 194 as a wake-up pattern 160 and/or to be able to exclusively detect the second wake-up pattern 196 as a wake-up pattern 160.

Against this background, the CAN system 100 may comprise the CAN bus 104, at least one first CAN transceiver 186, and at least one second CAN transceiver 188. In another example, the CAN system 100 may comprise the CAN bus 104, at least one first CAN device 198 comprising the first CAN transceiver 186, and at least one second CAN device 200 comprising the second CAN transceiver 188. The CAN system 100 may preferably comprise a plurality of first CAN devices 198 and a plurality of second CAN devices 200. The plurality of first CAN devices 198 may form a first partial network via the CAN bus 104. The plurality of second CAN devices 200 may form a second partial network via the CAN bus 104.

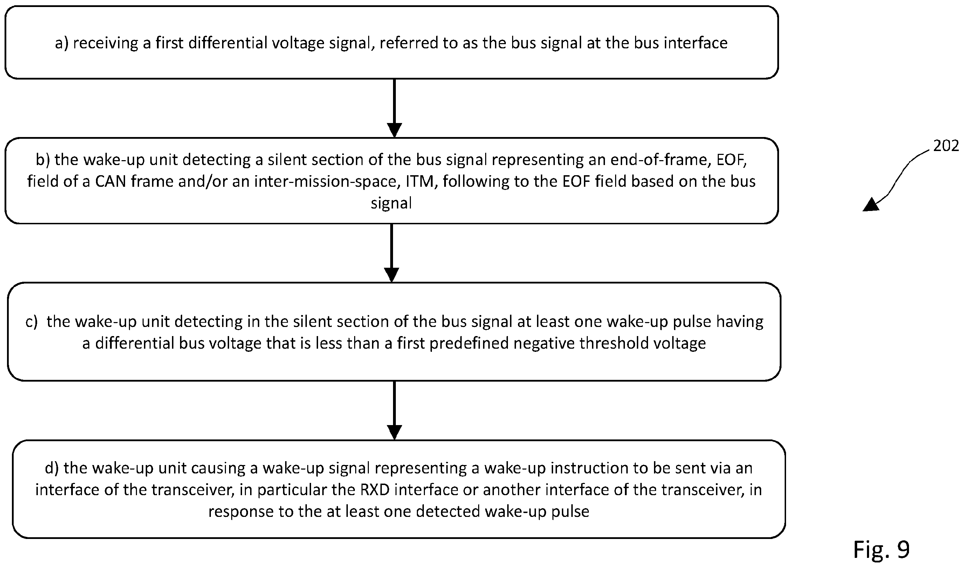

Figure 9 schematically illustrates an example of a flowchart for a method 202. In particular, the method 202 is for the CAN transceiver 120. The method 202 may comprise the following steps:
a) receiving a first differential voltage signal, referred to as the bus signal 142 at the bus interface 132,
b) the wake-up unit 140 detecting a silent section 144 of the bus signal 142 representing an end-of-frame, EOF, field 146 of a CAN frame 148 and/or an intermission-space, ITM, 150 following to the EOF field 146 based on the bus signal 142,
c) the wake-up unit 140 detecting in the silent section 144 of the bus signal 142 at least one wake-up pulse 152 having a differential bus voltage that is less than a first predefined negative threshold voltage TH1, and
d) the wake-up unit 140 causing a wake-up signal representing a wake-up instruction to be sent via an interface of the transceiver, in particular the RXD interface 130 or another interface 220 of the transceiver 120, in response to the at least one detected wake-up pulse 152.

For the method 202, reference is made to the preceding explanations, preferred features, technical effects, and advantages in an analogous manner as previously explained in connection with the CAN transceiver 120, the CAN device 102, and/or the CAN system 100.

Although the described exemplary embodiments disclosed herein focus on devices, systems, and methods for using same, the present disclosure is not necessarily limited to the example embodiments illustrate herein.

The systems and methods described herein may at least partially be embodied by a computer program or a plurality of computer programs, which may exist in a variety of forms both active and inactive in a single computer system or across multiple computer systems. For example, they may exist as software program(s) comprised of program instructions in source code, object code, executable code or other formats for performing some of the steps. Any of the above may be embodied on a computer-readable medium, which may include storage devices and signals, in compressed or uncompressed form.

As used herein, the term "computer" refers to any electronic device comprising a processor, such as a general-purpose central processing unit (CPU), a specific-purpose processor or a microcontroller. A computer is capable of receiving data (an input), of performing a sequence of predetermined operations thereupon, and of producing thereby a result in the form of information or signals (an output). Depending on the context, the term "computer" will mean either a processor in particular or more generally a processor in association with an assemblage of interrelated elements contained within a single case or housing.

The term "processor" or "processing unit" refers to a data processing circuit that may be a microcontroller, a co-processor, a microcontroller, a microcomputer, a central processing unit, a field programmable gate array (FPGA), a programmable logic circuit, and/or any circuit that manipulates signals (analog or digital) based on operational instructions that are stored in a memory. The term "memory" refers to a storage circuit or multiple storage circuits such as read-only memory, random access memory, volatile memory, non-volatile memory, static memory, dynamic memory, Flash memory, cache memory, and/or any circuit that stores digital information.

As used herein, a "computer-readable medium" or "storage medium" may be any means that can contain, store, communicate, propagate, or transport a computer program for use by or in connection with the instruction execution system, apparatus, or device. The computer-readable medium may be, for example but not limited to, an electronic, magnetic, optical, electromagnetic, infrared, or semiconductor system, apparatus, device, or propagation medium. More specific examples (non-exhaustive list) of the computer-readable medium may include the following: an electrical connection having one or more wires, a portable computer diskette, a random-access memory (RAM), a read-only memory (ROM), an erasable programmable read-only memory (EPROM or Flash memory), an optical fiber, a portable compact disc read-only memory (CDROM), a digital versatile disc (DVD), a Blu-ray disc (BD), and a memory card.

It is noted that the embodiments above have been described with reference to different subject-matters. In particular, some embodiments may have been described with reference to method-type claims whereas other embodiments may have been described with reference to apparatus-type claims. However, a person skilled in the art will gather from the above that, unless otherwise indicated, in addition to any combination of features belonging to one type of subject-matter also any combination of features relating to different subject-matters, in particular a combination of features of the method-type claims and features of the apparatus-type claims, is considered to be disclosed with this document.

Furthermore, it is noted that the drawings are schematic. In different drawings, similar or identical elements are provided with the same reference signs. Furthermore, it is noted that in an effort to provide a concise description of the illustrative embodiments, implementation details which fall into the customary practice of the skilled person may not have been described. It should be appreciated that in the development of any such implementation, as in any engineering or design project, numerous implementation-specific decisions must be made in order to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill.

Finally, it is noted that the skilled person will be able to design many alternative embodiments without departing from the scope of the appended claims. In the claims, any reference sign placed between parentheses shall not be construed as limiting the claim. The word "comprise(s)" or "comprising" does not exclude the presence of elements or steps other than those listed in a claim. The word "a" or "an" preceding an element does not exclude the presence of a plurality of such elements. Measures recited in the claims may be implemented by means of hardware comprising several distinct elements and/or by means of a suitably programmed processor. In a device claim enumerating several means, several of these means may be embodied by one and the same item of hardware. The mere fact that certain measures are recited in mutually different dependent claims does not indicate that a combination of these measures cannot be used to advantage.

Unless stated otherwise, terms such as "first" and "second" are used to arbitrarily distinguish between the elements such terms describe. Thus, these terms are not necessarily intended to indicate temporal or other prioritization of such elements.

## Claims

1. A Controller Area Network, CAN, transceiver, comprising:
a transmit data, TXD, interface,
a receive data, RXD, interface,
a bus interface for coupling to a CAN bus,
a receiver unit,
a transmitter unit, and
a wake-up unit,
wherein the bus interface is configured to receive a first differential voltage signal, referred to as the bus signal, from the CAN bus via the bus interface, wherein the wake-up unit is configured to detect a silent section of the bus signal representing an end-of-frame, EOF, field of a first CAN frame and/or an inter-mission-space, ITM, following to the EOF field based on the bus signal,
wherein the wake-up unit is configured to detect in the silent section of the bus signal at least one wake-up pulse having a differential bus voltage that is less than a first predefined negative threshold voltage, and
wherein the wake-up unit is configured to cause a wake-up signal representing a wake-up instruction to be sent via an interface of the transceiver, in particular the RXD interface or another interface of the transceiver, in response to the at least one detected wake-up pulse.

2. The CAN transceiver according to the preceding claim, wherein the wake-up unit is configured to detect, based on the bus signal, a trigger pulse having a differential bus voltage that is greater than a positive, predefined second threshold voltage, wherein the wake-up unit is configured to wait for a predefined waiting time, that follows the trigger pulse, wherein the wake-up unit is configured to detect, based on the bus signal, a base section of the bus signal, wherein the base section having a differential bus voltage between the first threshold voltage and the second threshold voltage during a predefined base time following the waiting time, wherein the wake-up unit is configured to detect, based on the bus signal, an observation section of the bus signal, wherein the observation section having a differential bus voltage that is less than the second threshold voltage during a predefined observation time following the base time, wherein the observation section forms at least a part of the silent section, and wherein the wake-up unit is configured to detect in the observation section of the bus signal at least one wake-up pulse having a differential bus voltage that is less than the first threshold voltage.

3. The CAN transceiver according to the preceding claim, wherein the waiting time is between 0.01 µs and 2 µs, in particular between 0.1 µs and 1.3 µs, and/or wherein the base time is between 2 and 7 times a cycle time according to a predefined bit frequency at the bus interface, and/or wherein the observation time is between 5 and 7 times the cycle time according to the predefined bit frequency at the bus interface.

4. The CAN transceiver according to any of the preceding claims 3 to 4, wherein the second threshold voltage is between plus 0.5 volts and plus 0.9 volts.

5. The CAN transceiver according to any of the preceding claims, wherein the first threshold voltage is between minus 0.25 volts and minus 0.45 volts.

6. The CAN transceiver according to any of the preceding claims, wherein the wake-up unit is configured to detect in the silent section a predefined wake-up pattern comprising a plurality of wake-up pulses each having a differential bus voltage that is less than the first predefined negative threshold voltage, and wherein the wake-up unit is configured to cause the wake-up signal representing a wake-up instruction to be sent, in particular via the RXD interface or another interface of the transceiver, in response to the detected wake-up pattern.

7. The CAN transceiver according to any of the preceding claims, wherein the wake-up unit is coupled to the receiver unit and/or the RXD interface to cause the sending of the wake-up signal.

8. The CAN transceiver according to any of the preceding claims, wherein the CAN transceiver and/or the receiver unit is configured to treat a wake-up pulse as a recessive bit.

9. The CAN transceiver according to any of the preceding claims, wherein wake-up unit is configured to control the receiver unit such that the receiver unit generates a signal at the RXD interface representing a recessive bit based on the wake-up pulse.

10. The CAN transceiver according to any of the preceding claims, wherein the wake-up unit is configured to detect a first section of the bus signal representing at least one of the Start-of-frame field, SOF, the arbitration field, and/or the control field of the first CAN frame, wherein the wake-up unit is configured to detect another pattern, referred to as reference pattern, being represented by the first section of the bus signal, and wherein the wake-up unit is configured to cause the wake-up signal only if and/or after the reference pattern was detected.

11. The CAN transceiver according to any of the preceding claims, wherein the CAN transceiver, if being activated, is configured to receive, via an interface of the transceiver other than the bus interface, a control instruction to send out a wake-up pattern, wherein the CAN transceiver is configured to receive another CAN frame, referred to as second CAN frame, via the TXD interface, and wherein the CAN transceiver is configured to transmit an output signal via the bus interface, such that the output signal represents the second CAN frame with the exception that an instruction section of the output signal representing the EOF and/or the ITM of the CAN frame further comprises at least one wake-up pulse having a differential bus voltage less than the first threshold voltage.

12. A CAN device comprising:
a CAN transceiver according to any of the preceding claims, and
a CAN controller,
wherein the CAN controller is coupled to the TXD interface of the CAN transceiver and the RXD interface of the CAN transceiver,
wherein the wake-up unit of the CAN transceiver is configured, in response to the detected wake-up pulse or the detected wake-up pattern, to cause the wake-up signal to be sent to the CAN controller via the RXD interface or another interface of the CAN transceiver, and
wherein the CAN controller is configured to change from an inactive state to an operating state in response to the received wake-up signal.

13. A CAN system comprising:
a CAN bus,
a first CAN transceiver according to any of the preceding claims 8 to 11, if depending on claim 8, and
a second CAN transceiver according to any of the preceding claims 8 to 11, if depending on claim 8,
wherein the wake-up unit of the first CAN transceiver is configured to detect as a wake-up pattern a first wake-up pattern,
wherein the wake-up unit of the second CAN transceiver is configured to detect as another wake-up pattern a second wake-up pattern, and
wherein the first and second wake-up patterns are different.

14. The CAN system according to the preceding claim, comprising: a first CAN device according to claim 12, a second CAN device according to claim 12, wherein the first CAN device comprises as transceiver the first transceiver, and wherein the second CAN device comprises as transceiver the second transceiver.

15. A method for a CAN transceiver comprising a transmit data, TXD, interface, a receive data, RXD, interface, a bus interface for coupling to a CAN bus, a receiver unit, a transmitter unit, and a wake-up unit, wherein the method comprises the steps of:
a) receiving a first differential voltage signal, referred to as the bus signal at the bus interface,
b) the wake-up unit detecting a silent section of the bus signal representing an end-of-frame, EOF, field of a CAN frame and/or an inter-mission-space, ITM, following to the EOF field based on the bus signal,
c) the wake-up unit detecting in the silent section of the bus signal at least one wake-up pulse having a differential bus voltage that is less than a first predefined negative threshold voltage, and
d) the wake-up unit causing a wake-up signal representing a wake-up instruction to be sent via an interface of the transceiver, in particular the RXD interface or another interface of the transceiver, in response to the at least one detected wake-up pulse.
